(19) Europäisches Patentamt
European Patent Office
Office européen des brevets

(11) **EP 4 375 104 B1**

(12) **EUROPEAN PATENT SPECIFICATION**

(45) Date of publication and mention
of the grant of the patent:
**24.09.2025 Bulletin 2025/39**

(21) Application number: **23210665.8**

(22) Date of filing: **17.11.2023**

(51) International Patent Classification (IPC):
*B60K 6/12* (2006.01)    *B60K 6/46* (2007.10)
*B60K 6/52* (2007.10)    *F16H 61/421* (2010.01)
*F16H 61/431* (2010.01)    *F16H 61/465* (2010.01)
*F16H 61/47* (2010.01)    *B60W 10/06* (2006.01)
*B60W 30/188* (2012.01)    *B60W 20/10* (2016.01)
*B60W 30/182* (2020.01)    *B60W 10/103* (2012.01)
*B60K 17/10* (2006.01)    *F16H 61/40* (2010.01)
*B60W 50/00* (2006.01)

(52) Cooperative Patent Classification (CPC):
**B60W 10/06; B60K 17/10; B60W 10/103;
B60W 20/10; B60W 30/182; B60W 30/1882;
F16H 61/421; F16H 61/431; F16H 61/47;**
B60W 2050/0011; B60W 2300/15; B60W 2300/17;
B60W 2540/10; B60W 2710/0644; B60W 2720/10;
(Cont.)

(54) **METHOD AND SYSTEM FOR CONTROLLING A PROPULSION SYSTEM OF A WORK OR AGRICULTURAL VEHICLE**

VERFAHREN UND SYSTEM ZUR STEUERUNG EINES ANTRIEBSSYSTEMS EINES ARBEITS-
ODER LANDWIRTSCHAFTLICHEN FAHRZEUGS

PROCÉDÉ ET SYSTÈME DE COMMANDE D'UN SYSTÈME DE PROPULSION D'UN VÉHICULE DE
TRAVAIL OU AGRICOLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.11.2022 IT 202200024126**

(43) Date of publication of application:
**29.05.2024 Bulletin 2024/22**

(73) Proprietor: **CNH Industrial Italia S.p.A.
10156 Torino (IT)**

(72) Inventors:
• **GARRAMONE, Adriano
10156 Turin (IT)**
• **VENEZIA, Antonio
10156 Turin (IT)**
• **LIBERTI, Stefano
10156 Turin (IT)**
• **GRAVILI, Andrea
10156 Turin (IT)**

(74) Representative: **CNH Industrial IP Department
Leon Claeysstraat 3A
8210 Zedelgem (BE)**

(56) References cited:
**EP-A1- 3 933 121**    **EP-A2- 3 072 765**
**JP-A- H10 306 874**

(52) Cooperative Patent Classification (CPC): (Cont.)
F16H 59/18; F16H 61/465; F16H 2059/366

## Description

## Field of the invention

The present invention relates to the field of hydraulic transmissions of work vehicles and agricultural vehicles, where the hydraulic transmission is driven by an internal combustion engine.

## State of the art

In working and agricultural machines, the transmission for transferring the motion of a prime mover to the wheels is of the hydraulic type. Very often the transmission defines a series configuration, in which the prime mover drives a hydraulic pump with variable displacement, which, in turn, drives a hydraulic motor which can have both fixed and variable displacement.

The pump and the hydraulic motor are interconnected in a per se known way by means of a so-called high pressure hydraulic line or "forward" line and a low pressure hydraulic line or return line for the hydraulic oil moving towards the hydraulic pump.

A discrete ratio gearbox is often, but not always, placed between the hydraulic motor and the wheels. Very often there are just two gears, to facilitate the autonomous movement of the vehicle from one place to another place of work.

Generally, the rotational speed of the prime mover is directly proportional to the position of the throttle lever and the pump displacement is proportional to the rotational speed of the prime mover, while the displacement of the hydraulic motor is inversely proportional to the vehicle speed.

Consequently, the speed of the vehicle and the rotational speed of the prime mover are approximately directly proportional to each other.

Consequently, the speed of the vehicle and the position of the accelerator lever are approximately directly proportional to each other.

This first operating mode is for convenience defined as "accelerator-base", since the rotation speed of the prime mover is circa directly proportional to the position of the accelerator lever and the vehicle speed depends on the rotation speed of the prime mover.

The term "circa" highlights that the control is in open loop, therefore an increase in the slope causes the vehicle and also the prime mover to slow down.

This fact is very advantageous when the vehicle is working because the driver can manage the generation of hydraulic fluid, necessary to operate the various on-board devices functional to the workings, with the accelerator lever.

When the vehicle, however, moves from one place of work to another, the fuel consumption can be excessive and therefore the same applicant has provided a method for managing the engine and the hydraulic transmission with application EP21183330.

However, the implementation of the ECO mode according to this solution is especially useful during long journeys of the vehicle and difficult to exploit during the vehicle work phases.

EP2119943 shows a solution according to which the proportionality ratio between the displacement of the hydrostat hydraulic pump and the rotation speed of the prime mover is varied in order to reduce fuel consumption. EP3072765A2 and JPH10306874A disclose two alternative methods for controlling a speed change between low speed high engine rotation and high speed low engine rotation. The independent claim of this application specifies that the displacement of the hydraulic pump is a function of the rotational speed of the prime mover.

In the following, "speed of the prime mover" means the "rotation speed of the prime mover".

Unless specifically excluded in the detailed description that follows, what is described in this chapter is to be considered as an integral part of the detailed description.

## Summary of the invention

The object of the present invention is to reduce the fuel consumption of a working or agricultural vehicle in at least an alternative way to the prior art.

Another object is to obtain a reduction in consumption also during the working conditions of the vehicle.

The basic idea of the present invention is that of setting an engine limit speed in which fuel consumption is minimized, and of realizing a first "accelerator-base" operating mode by maintaining a proportional relationship between a pedal position of the accelerator, the rotation speed of the engine and a displacement of the hydraulic pump, while upon reaching the limit speed, the engine speed remains fixed at the limit speed, while a proportionality is maintained between the position of the accelerator pedal and the displacement of the pump hydraulics.

In other words, when the limit speed is reached, there is no longer any proportional relationship between the engine speed and the hydraulic pump displacement, since the engine speed remains fixed. The proportionality between the accelerator lever and the displacement of the hydraulic pump is maintained so as to allow the vehicle to reach a higher speed than it would reach in accelerator-base mode with the engine speed at the limit speed.

Optionally, a sort of mapping of the positions of the accelerator lever is performed starting from the position corresponding to the limit speed of the engine, up to the position of full actuation of the accelerator lever. In this way, the hydrostat control operates directly as a function of the position of the accelerator lever rather than as a function of the engine speed.

Optionally, a feedback control is activated which controls the displacement of the hydraulic motor and/or pump as a function of the vehicle speed to bring the vehicle speed to the speed corresponding to the current position of the accelerator lever, although the engine speed is fixed, at the limit speed.

The purpose is to keep the engine at a pre-set rotation speed, manipulating exclusively the transmission.

Evidently, when the throttle lever is released below the limit position, the system switches to accelerator-base mode.

While in application EP21183330 the switching from the "accelerator-base" mode to the "ECO" mode is subordinate to the verification that a vehicle speed is approximately constant for a predetermined time interval, according to the present invention, the switching is subordinate to

- exceeding a limit position of the accelerator lever, where the limit position corresponds to the limit speed of the engine,
- the motor reaches the limit speed.

Preferably, a feedback control is performed on the speed of the prime mover to keep the speed of the prime mover sufficiently constant at the limit speed.

It may happen that the engine reaches or exceeds the limit speed because it is dragged by the hydrostat, while the vehicle is going downhill and the accelerator lever is released. In this event, the propulsion system switches to or remain in accelerator-base mode to provide full operator control of the vehicle.

Furthermore, it may happen that the accelerator lever exceeds the limit position, but the engine speed is lower than the limit speed. Even in these conditions, the propulsion system switches to or remain in accelerator-base mode to avoid incorrect control of the hydraulic pump, which would cause the prime mover to stall.

When ECO mode is active, the vehicle may slow down because, for example, the bucket is inserted into a pile of material, or the vehicle encounters an obstacle to progress.

Under these conditions, to prevent the engine from being overloaded and stalling, according to a preferred aspect of the present invention the pressure on the forward duct is monitored and when this exceeds a first predetermined pressure threshold, the control switches from the ECO mode to the accelerator-base. If the position of the accelerator lever remains unchanged or the operator tilts it further, the internal combustion engine tends to increase its speed, exceeding the aforementioned limit threshold in order to have the power necessary to face the resistant torque which opposes it.

However, when the throttle lever and engine rotation speed meet the above conditions again, the control restores the ECO mode.

Preferably, immediately after switching into ECO mode, the pressure monitoring on the forward line of the hydrostat is activated, so as to stop any further increase in the pump displacement in the event of reaching a second pressure threshold lower than or equal to the first pressure threshold.

This fact avoids a continuous switching between the accelerator-base mode and ECO mode.

In other words, when the second pressure threshold is exceeded, there is no longer any proportional relationship between the displacement of the hydraulic pump and the position of the accelerator lever, since the displacement of the hydraulic pump remains fixed.

Differently from what is described in question EP21183330, the ECO mode is activated much more quickly and has a greater adaptability.

Optionally, the first and second pressure thresholds can be set so as to have a more conservative behaviour when they are distant from each other or a more aggressive behaviour of the transmission when they are very close to each other or coincident.

The invention is defined by independent claims 1 and 7-9.

The dependent claims describe preferred variants of the invention, forming an integral part of the present description.

## Brief description of the figures

Further objects and advantages of the present invention will become clear from the detailed description that follows of an embodiment of the same (and of its variants) and from the annexed drawings given for purely explanatory and non-limiting purposes, in which:

Fig. 1 shows an example of a propulsion scheme of a working or agricultural vehicle in which the present invention is implemented,

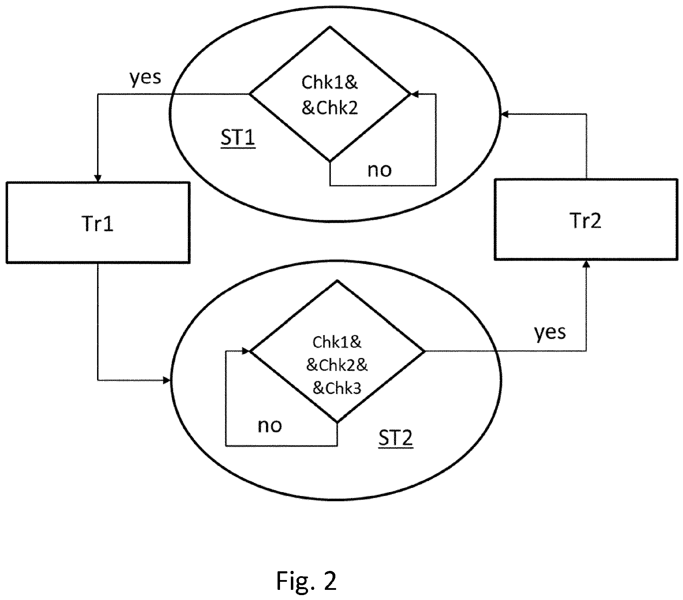

Fig.2 shows a state diagram of the control system object of the present invention;
Fig. 3 shows a detail of Fig.3;
Fig.4 shows a diagram showing the speed of the hydraulic motor and the displacement of the hydraulic pump as the position of the accelerator lever varies.

The same reference numbers and letters in the figures identify the same elements or components or functions.

In the context of this description, the term "second" component does not imply the presence of a "first" component. These terms are in fact used as labels to improve clarity, having no ordinal meaning unless it is clear from the text that there is a precise order to be respected.

The elements and characteristics illustrated in the various preferred embodiments, including the drawings, can be combined with each other without however departing from the scope of protection of the present application as described below.

## Detailed description of preferred embodiments

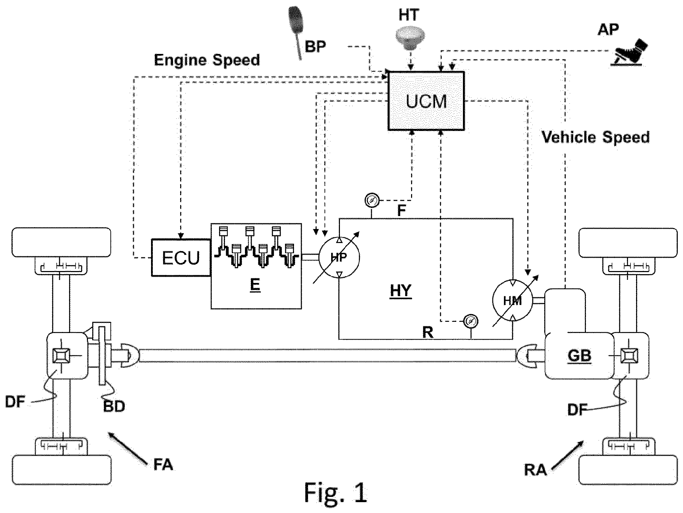

Figure 1 shows a diagram of the propulsion system of a working or agricultural vehicle.

The propulsion system comprises a prime mover E, generally an internal combustion engine, for example diesel or positive ignition.

The prime mover is configured to drive in rotation a variable geometry hydraulic pump HP, which feeds a hydraulic motor HM, for vehicular propulsion, by means of a forward or high pressure hydraulic line F and a return or low pressure hydraulic line R.

The hydraulic motor has a shaft operatively associated with a driving axle RA of the vehicle.

Preferably, this association is achieved by means of a discrete ratio gearbox GB. Generally, the secondary shaft of the gearbox GB rotates a port of a differential DF, to rotate the two axle shafts of the driving axle RA. The configuration shown in Figure 1 has four driving wheels, so that a rear driving axle RA and a front driving axle FA are identified.

The configuration shown, is per se known.

According to the present invention, the hydraulic pump can be controlled independently of the rotation speed of the prime mover, which drives the same pump in rotation. More preferably, the hydraulic motor has a variable displacement and can be controlled independently of the hydraulic pump by means of respective electro-hydraulic valves, not shown.

An engine control processing unit (ECU) controls the operation of the prime mover.

A vehicle processing unit UCM interfaces with the engine control processing unit ECU and controls the hydraulic transmission HY as well as monitors the position of levers, buttons and man/machine interface commands, both in relation to vehicle movement and in relation to the functioning of arms and organs connected to the vehicle.

BP indicates the brake pedal, AP the accelerator pedal, HT the hand lever of the accelerator.

The existence of two distinct processing units is completely optional. A single processing unit can control both the prime mover and all other vehicle functions and can monitor the activation of commands by the operator.

The present invention is preferably implemented in the vehicle processing unit UCM, but nothing prevents it from being implemented in the ECU.

Engine speed can be measured in any way, for example by the so-called phonic wheel associated with the crankshaft (not shown).

As vehicle speed increases, the displacement of the hydraulic pump increases, while the displacement of the hydraulic motor decreases.

The inverse proportionality between the value of the hydraulic pump displacement and the value of the hydraulic motor displacement can be tabulated according to a prearranged strategy.

For example, a pressure sensor MA is arranged on the forward hydraulic line F and a pressure sensor MB can be arranged on the return hydraulic line.

An angle sensor is associated with the accelerator lever HT to determine the position of the same lever, both in forward and reverse gear, considering that in some agricultural machines, generally, a single lever allows to control both travel directions.

According to the present invention, the control causes switching between

- a first operating mode ST1 in which the inclination of the accelerator lever proportionally determines a rotation speed of the prime mover, consequently a corresponding proportional displacement of the hydraulic pump and therefore a proportional speed of the vehicle and
- a second operating mode ST2 in which the inclination of the accelerator lever indicates a speed of the vehicle, while the prime mover is operated at an approximately fixed predetermined rotation speed FSE, independently of the speed *Vehicle Speed* of the vehicle.

Let name as "limit displacement" DL, the displacement of the hydraulic pump when the prime mover reaches the limit rotational speed in the first operating mode.

Let name as "limit vehicle speed", the speed of the vehicle when the engine reaches the limit speed in the first operating mode.

In the same way, let name AL as the "limit angle", the angle or position of the accelerator lever which corresponds to the limit speed FSE of the prime mover.

This nomenclature can be used because, in the first operating mode, there is a predetermined direct proportionality between the accelerator lever angle, the engine speed, the pump displacement and the vehicle speed.

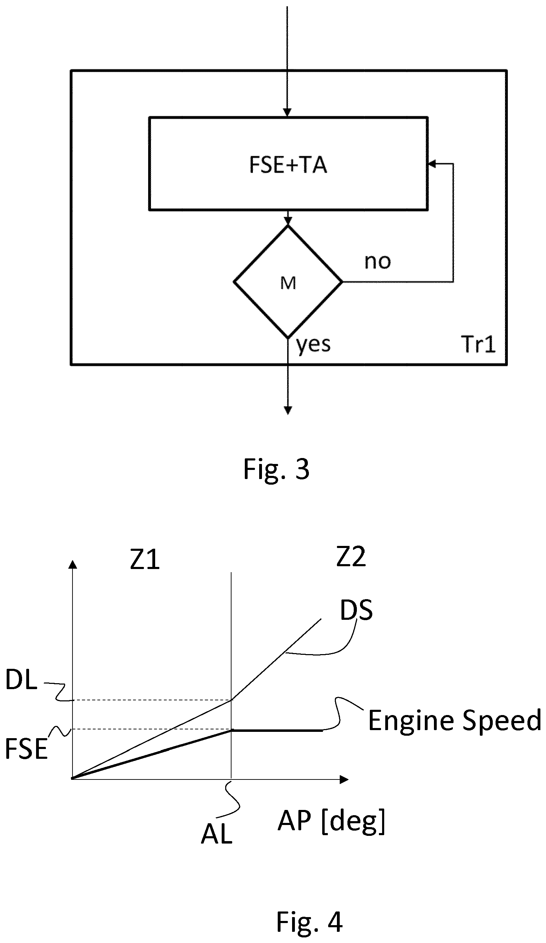

Figure 4 shows a graph in a Cartesian plane in which the accelerator angle AP is indicated on the ordinate axis and the rotation speed of the prime mover Engine Speed and the displacement of the hydraulic pump DS are indicated on the ordinates.

The graph is divided into two zones: a left zone Z1 and a right zone Z2, divided by the angular position AL of the accelerator lever, which corresponds to the limit speed FSE and the value of the limit displacement DL of the hydraulic pump.

In the left zone Z1, the system operates in the first operating mode ST1.

In the right zone Z2, the system operates in the second operating mode ST2.

In the right zone Z2, the motor operates at a constant speed equal to the limit speed FSE and, preferably, a feedback control intervenes so as to keep the speed of the prime mover constant.

However, the displacement of the hydraulic pump continues to be proportional to the angle of the accelerator, even if the proportionality factor, represented by the angular coefficient of the two straight lines that make up the indicative line of the displacement DS, may be different between the two areas.

It can be appreciated from Figure 4 that the angular coefficient of the curve DS is greater in the right zone Z2 than in the left zone Z1, but it could also be the opposite or the angular coefficients could coincide.

As described above, when the accelerator angle exceeds the limit angle AL, when the prime mover also reaches the limit speed, then the following conditions are verified:

- Chk 1: inclination of the accelerator lever exceeds a limit position AL corresponding to said limit speed FSE of the prime mover,
- Chk 2: the rotation speed of the prime mover is equal to or greater than said limit speed FSE, and when said conditions are simultaneously verified then it happens
- Tr1: system switching from the first ST1 to the second operating mode ST2.

In the second operating mode, therefore, a proportion is maintained between the inclination of the accelerator lever and the displacement of the pump, so as to be able to exceed the limit speed of the vehicle corresponding to the limit speed of the prime mover, if this were operated in the first operating mode.

In ECO mode, obviously, the maximum speed of the vehicle can be expected to be lower than that achievable in accelerator-base mode, so as not to overload the hydrostat and/or the prime mover.

Preferably, the adaptation of the hydraulic transmission comprises increasing the displacement of the pump and/or reducing the displacement of the hydraulic motor.

According to a preferred variant of the present invention, the following steps are performed during the second operating mode ST2:

- Chk3: a first monitoring process of a pressure on said forward line F and when the pressure exceeds a first pressure threshold Th1,
- Tr2: switching of the system from the second ST2 to the first operating mode ST1.

This control allows not to overload the hydrostat and/or the prime mover.

According to a further aspect of the invention, immediately after the switching TR1 from the first to the second operating mode, the following steps are performed:

- M: a second pressure monitoring process on the inlet line F and when the pressure exceeds a second pressure Th2 threshold lower than or equal to the first pressure threshold Th1, then

- TRS: stop of a further increase in the displacement of the hydraulic pump.

This control makes it possible to adapt the behaviour of the hydrostat to the circumstances, preventing it from reaching the threshold Th1, which involves switching from the second to the first operating mode.

In figure 4, this block of the hydraulic pump displacement increase can be imagined as a flat trend like the one relating to the rotation speed of the prime mover in the second zone Z2.

Figure 3 shows the activation of the second monitoring process while the prime mover is operating at rotation speed FSE and the hydrostat displacement gradually increases along the curve DS in the right-hand area Z2 of the graph in figure 4.

From figure 3 it is understood that as long as the result of the second monitoring process is negative, it is possible to further increase the displacement of the hydraulic pump, otherwise, this becomes fixed, regardless of the accelerator angle indicated by the operator.

Evidently, the increase in the displacement of the hydraulic pump is carried out moving on the DS curve until the current accelerator angle is reached.

The pressure threshold Th1 can be selected not only taking into account the characteristics of the hydrostat, but also the torque curve of the prime mover.

Optionally, similarly to what provided for in application EP21183330, it is possible to exit the ECO mode to return to the accelerator-base mode, when further conditions occur such as for example

- The torque delivered by the prime mover is higher than a predetermined torque threshold,
- The rotation speed of the prime mover is lower than a predetermined speed threshold,
- An inclination of an actuation control lever of a hydraulic member such as an arm or the like, exceeds a predetermined threshold.

It is worth highlighting that reference has always been made to the displacement of the variable displacement pump. However, when the hydraulic motor has variable displacement, controllable independently from the displacement of the hydraulic pump, the hydrostat transmission ratio can be controlled by operating on both the displacement of the hydraulic pump and the displacement of the hydraulic motor. Optionally, the hydraulic pump is first controlled until a target displacement is reached which is approximately close to the maximum displacement, then the feedback control on the hydraulic motor is activated, keeping the pump displacement unchanged.

Therefore, the closed-loop control on the hydraulic motor is activated only after the control on the pump is considered stable. In other words, the serialization of two controls is carried out.

Optionally, the closed-loop control of the hydraulic motor and the pump are achieved by means of a respective PID controller including an "Anti wind up" function, i.e. a function which avoids overshoots.

The following are known formulas

$$Vp=Q*1000/rpmE,$$

$$Vm=Q*1000/rpmM,$$

$$(Vspeed*TR)/(R*3.6)=rpmM,$$

with Vp[cc/rpm] pump displacement,
Q[l/m] flow rate,
rpmE[rpm] number of revolutions of the heat engine,
rpmM number of revolutions of the hydraulic motor,
TR gear ratio from hydraulic motor to wheels,
R wheel radius.

Combining these formulas in a known way, but imposing the dependence on the position of the accelerator lever, it can be obtained a control law of the hydraulic motor in open circuit up to the achievement of the displacement necessary to control the speed of the vehicle, although the rotation speed of the prime mover is limited in the second operating mode. Then, the feedback control with Anti wind up described above is activated.

It is worth highlighting that when the system is in the second operating mode, as long as the conditions Chk1, Chk2 and Chk3 are verified, the operator can vary the inclination of the accelerator lever and therefore the vehicle speed while remaining in the second operating mode. This fact gives the operator greater freedom in controlling the vehicle in conditions of considerable fuel economy.

According to a preferred variant of the present invention which is combined with any of the previous variants, when the propulsion system operates in accordance with the second operating mode, the control further comprises the fact of monitoring the rapidity with which the accelerator lever is operated.
If the action on the accelerator lever is rapid, then the system switches from the second ST2 operating mode to the first ST1 "throttle-basic" operating mode.

If, on the other hand, the action is gentle, the control plans to adapt the displacement of the pump and/or hydraulic motor to adapt the vehicle speed to the inclination of the accelerator lever.

The working or agricultural vehicle, also an object of the present invention, in which the present control is implemented, can be equipped with various hydraulic functions. It is known that these functions are often activated by the same pump HP described above or by one or more independent pumps, all of which are driven in rotation by the prime mover. Preferably, while traveling in ECO mode, if a hydraulic function is activated, a predetermined activation threshold of the actuation command is exceeded, for example beyond a certain inclination of the joystick lever, the control returns to work in the first operating mode so as not to affect the vehicle performance and in particular the response of the hydraulic actuators to the commands given by the user.

The present invention can advantageously be implemented through a computer program comprising coding means for carrying out one or more steps of the method, when this program is executed on a computer. Therefore it is understood that the scope of protection extends to said computer program and also to computer-readable means comprising a recorded message, said computer-readable means comprising program coding means for carrying out one or more steps of the method, when said program is run on a computer. Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

**Claims**

1. A method for controlling a propulsion system of a commercial or agricultural vehicle, wherein the propulsion system comprises a prime mover (E) and a hydraulic transmission (HY) including a variable displacement pump (HP) configured to be driven in rotation by the prime mover and a variable displacement hydraulic motor (HM), operatively connected to the pump by means of a forward hydraulic line (F) and a return line (R), the method providing

   - a first operating mode (ST1), wherein an inclination of an accelerator lever indicates a proportional rotation speed of the prime mover and a corresponding proportional displacement of the hydraulic pump and
   - a second operating mode (ST2), wherein said inclination of the lever indicates a speed of the vehicle, while the prime mover is operated at a predetermined approximately fixed limit speed (FSE) and the displacement of the hydraulic pump is adjusted (TA) so as to reach said indicated vehicle speed,

   the method, in said first operating mode, is **characterized in that** it comprises the monitoring of the following conditions:

   - (Chk 1) inclination of the accelerator lever exceeds a limit position (AL) corresponding to said limit speed of the prime mover,
   - (Chk 2) the rotation speed of the prime mover is equal to or greater than said limit speed (SL),

and when said conditions are simultaneously verified
- (Tr1) switching of the system from said first (ST1) to said second operating mode (ST2).

2. The method according to claim 1, wherein a feedback control is activated during said second operating mode to maintain the rotational speed of the prime mover at the limiting speed.

3. The method according to claim 1 or 2, wherein, in said second operating mode (ST2), the method comprises said monitoring of said conditions:

- (Chk 1) inclination of the accelerator lever exceeds a limit position (AL) corresponding to said limit speed of the prime mover,
- (Chk 2) the rotation speed of the prime mover is equal to or greater than said limit speed (SL), and when at least one of them is unverified, then
- (Tr2) switching of the system from said second (ST2) to said first operating mode (ST1).

4. The method according to claim 3, further comprising, during said second operating mode, the monitoring of a further condition

- (Chk3) a pressure on said delivery line (F) is higher than a first pressure threshold (Th1), and when at least said further condition is not verified, then
- (Tr2) switching of the system from said second (ST2) to said first operating mode (ST1).

5. The method according to claim 4, further comprising, immediately after said switching from said first to said second operating mode,

- (M) a second pressure monitoring process on said forward line (F) and when the pressure exceeds a second pressure threshold (Th2) lower than or equal to said first pressure threshold (Th1),
- (TRS) stopping of a further increase in the displacement of the hydraulic pump.

6. Method according to any one of the preceding claims 1 - 5, wherein, in said second operating mode, the method further comprises detecting at least one of the following further conditions

- a quick action on the accelerator lever
- a sudden change in load applied to the prime mover,

and when at least one of said further conditions is verified, the method provides for switching (TR2) from the second to the first operating mode.

7. A computer program comprising program coding means arranged to carry out all steps (Chk1 - Chk3, TR1, TR2, M, TRS) of any one of claims 1 to 6, when said program is run on a computer.

8. A computer readable means comprising a recorded program, said recorded program comprising program coding means arranged for carrying out all steps (Chk1 - Chk3, TR1, TR2, M, TRS ) of any one of claims 1 to 6, when said program is run on a computer.

9. A work or agricultural vehicle comprising a propulsion system comprising a prime mover (E) and a hydraulic transmission (HY) comprising a variable displacement pump (HP) configured to be driven in rotation by the prime mover and a variable displacement hydraulic motor (HM) operatively connected to the pump by a line forward (F) and one return hydraulics, the propulsion system being adapted to operate according to

- a first operating mode (ST1), wherein an inclination of an accelerator lever indicates a proportional rotation speed of the prime mover and a corresponding proportional displacement of the hydraulic pump and
- a second operating mode (ST2), wherein said inclination of the lever indicates a speed of the vehicle, while the prime mover is operated at a predetermined approximately fixed limit speed (FSE) and the displacement of the hydraulic pump is adjusted (TA) so as to reach said indicated vehicle speed,

the system is **characterized in that** it comprises processing means (ECM) configured, in said first operating mode, to monitor the following conditions:

- inclination of the accelerator lever exceeds a limit position (AL) corresponding to said limit speed of the prime mover,
- the rotation speed of the prime mover is equal to or greater than said limit speed (SL),

and when said conditions are simultaneously verified, the processing means being configured to switch the operating mode of the propulsion system from said first (ST1) to said second operating mode (ST2).

**Patentansprüche**

1. Verfahren zur Steuerung eines Antriebssystems eines Nutz- oder landwirtschaftlichen Fahrzeugs, wobei das Antriebssystem einen Primärantrieb (E) und ein hydraulisches Getriebe (HY) umfasst, das eine Verstellpumpe (HP), die dazu eingerichtet ist, vom Primärantrieb rotatorisch angetrieben zu werden, sowie einen verstellbaren Hydraulikmotor (HM) umfasst, der über eine hydraulische Zuführleitung (F) und eine Rücklaufleitung (R) wirkend mit der Pumpe verbunden ist, wobei das bereitstellt:

einen ersten Betriebsmodus (ST1), in dem eine Neigung eines Gashebels eine proportionale Drehzahl des Primärantriebs sowie eine entsprechende proportionale Verstellung der Hydraulikpumpe angibt, und
einen zweiten Betriebsmodus (ST2), in dem die Neigung des Hebels eine Geschwindigkeit des Fahrzeugs angibt, während der Primärantrieb mit einer vorbestimmten, im Wesentlichen konstanten Grenzdrehzahl (FSE) betrieben wird und die Verstellung der Hydraulikpumpe (TA) so geregelt wird, dass die angegebene Fahrzeuggeschwindigkeit erreicht wird,
wobei das Verfahren in dem ersten Betriebsmodus **dadurch gekennzeichnet ist, dass** es die Überwachung der folgenden Bedingungen umfasst:

(Chk1) die Neigung des Gashebels übersteigt eine Grenzposition (AL), die der Grenzdrehzahl des Primärantriebs entspricht,
(Chk2) die Drehzahl des Primärantriebs ist gleich oder größer als die Grenzdrehzahl (SL),
und, wenn diese Bedingungen gleichzeitig erfüllt sind,
(TR1), erfolgt ein Umschalten des Systems vom ersten (ST1) in den zweiten Betriebsmodus (ST2).

2. Verfahren nach Anspruch 1, wobei eine Rückkopplungsregelung während des zweiten Betriebsmodus aktiviert wird, um die Drehzahl des Primärantriebs auf der Grenzdrehzahl zu halten.

3. Verfahren nach Anspruch 1 oder 2, wobei in dem zweiten Betriebsmodus (ST2) das Verfahren die Überwachung der Bedingungen umfasst:

(Chk1) die Neigung des Gashebels übersteigt eine Grenzposition (AL), die der Grenzdrehzahl des Primärantriebs entspricht,
(Chk2) die Drehzahl des Primärantriebs ist gleich oder größer als die Grenzdrehzahl (SL),
und, wenn mindestens eine dieser Bedingungen nicht erfüllt ist, dann
(TR2) Umschalten des Systems vom zweiten (ST2) in den ersten Betriebsmodus (ST1).

4. Verfahren nach Anspruch 3, weiterhin umfassend, während des zweiten Betriebsmodus, die Überwachung einer weiteren Bedingung:

(Chk3) ein Druck in der Zuführleitung (F) ist größer als ein erster Druckgrenzwert (Th1), und, wenn zumindest diese weitere Bedingung nicht erfüllt ist, dann
(TR2) Umschalten des Systems vom zweiten (ST2) in den ersten Betriebsmodus (ST1).

5. Verfahren nach Anspruch 4, weiterhin umfassend unmittelbar nach dem Umschalten vom ersten in den zweiten Betriebsmodus:

(M) einen zweiten Drucküberwachungsvorgang an der Zuführleitung (F) und, wenn der Druck einen zweiten Druckgrenzwert (Th2) überschreitet, der kleiner als oder gleich dem ersten Druckgrenzwert (Th1) ist,
(TRS) Stoppen einer weiteren Erhöhung der Verstellung der Hydraulikpumpe.

6. Verfahren nach einem der vorhergehenden Ansprüche 1 bis 5, wobei das Verfahren in dem zweiten Betriebsmodus weiterhin das Erfassen zumindest einer der folgenden weiteren Bedingungen umfasst:

eine schnelle Betätigung des Gashebels,
eine plötzliche Änderung der auf den Primärantrieb wirkenden Last,
und, wenn zumindest eine dieser weiteren Bedingungen erfüllt ist, sieht das Verfahren ein Umschalten (TR2) vom zweiten in den ersten Betriebsmodus vor.

7. Computerprogramm umfassend Programmcode-Mittel, die dazu eingerichtet sind, alle Schritte (Chk1 - Chk3, TR1, TR2, M, TRS) nach einem der Ansprüche 1 bis 6 auszuführen, wenn das Programm auf einem Computer ausgeführt wird.

8. Computerlesbares Medium, das ein aufgezeichnetes Programm umfasst, wobei das aufgezeichnete Programm Programmcode-Mittel umfasst, die dazu eingerichtet sind, alle Schritte (Chk1 - Chk3, TR1, TR2, M, TRS) nach einem der Ansprüche 1 bis 6 auszuführen, wenn das Programm auf einem Computer ausgeführt wird.

9. Nutz- oder landwirtschaftliches Fahrzeug, umfassend ein Antriebssystem mit einem Primärantrieb (E) und einem hydraulischen Getriebe (HY), das eine verstellbare Pumpe (HP), die dazu eingerichtet ist, vom Primärantrieb rotatorisch angetrieben zu werden, sowie einen verstellbaren Hydraulikmotor (HM) umfasst, der wirkend über eine Zuführleitung (F) und eine hydraulische Rücklaufleitung mit der Pumpe verbunden ist, wobei das Antriebssystem dazu eingerichtet ist, zu arbeiten gemäß:

einem ersten Betriebsmodus (ST1), in dem eine Neigung eines Gashebels eine proportionale Drehzahl des Primärantriebs sowie eine entsprechende proportionale Verstellung der Hydraulikpumpe angibt, und

einem zweiten Betriebsmodus (ST2), in dem die Neigung des Hebels eine Geschwindigkeit des Fahrzeugs angibt, während der Primärantrieb mit einer vorbestimmten, im Wesentlichen konstanten Grenzdrehzahl (FSE) betrieben wird und die Verstellung der Hydraulikpumpe (TA) so geregelt wird, dass die angegebene Fahrzeuggeschwindigkeit erreicht wird,

wobei das System **dadurch gekennzeichnet ist, dass** es Verarbeitungsmittel (ECM) umfasst, die im ersten Betriebsmodus dazu eingerichtet sind, folgende Bedingungen zu überwachen:

die Neigung des Gashebels übersteigt eine Grenzposition (AL), die der Grenzdrehzahl des Primärantriebs entspricht,

die Drehzahl des Primärantriebs ist gleich oder größer als die genannte Grenzdrehzahl (SL),

und, wenn diese Bedingungen gleichzeitig erfüllt sind, sind die Verarbeitungsmittel dazu eingerichtet, den Betriebsmodus des Antriebssystems vom ersten (ST1) in den zweiten Betriebsmodus (ST2) umzuschalten.

## Revendications

1. Un procédé de commande d'un système de propulsion d'un véhicule commercial ou agricole, dans lequel le système de propulsion comprend un moteur primaire (E) et une transmission hydraulique (HY) incluant une pompe à cylindrée variable (HP) configurée pour être entraînée en rotation par le moteur primaire et un moteur hydraulique à cylindrée variable (HM), raccordé fonctionnellement à la pompe par le biais d'une conduite hydraulique avant (F) et d'une conduite de retour (R), le procédé fournissant

- un premier mode de fonctionnement (ST1), dans lequel l'inclinaison d'un levier d'accélération indique une vitesse de rotation proportionnelle du moteur primaire et une cylindrée proportionnelle correspondante de la pompe hydraulique et

- un second mode de fonctionnement (ST2), dans lequel ladite inclinaison du levier indique une vitesse du véhicule, tandis que le moteur primaire fonctionne à une vitesse limite prédéterminée approximativement fixe (FSE) et que la cylindrée de la pompe hydraulique est ajustée (TA) de manière à atteindre ladite vitesse indiquée du véhicule, le procédé, dans ledit premier mode de fonctionnement, est **caractérisé en ce qu'**il comprend la surveillance des conditions suivantes :

- (Chk 1) l'inclinaison du levier d'accélération dépasse une position limite (AL) correspondant à ladite vitesse limite du moteur primaire,

- (Chk 2) la vitesse de rotation du moteur primaire est égale ou supérieure à ladite vitesse limite (SL),

et lorsque lesdites conditions sont vérifiées simultanément

- (Tr1) la commutation du système dudit premier mode de fonctionnement (ST1) audit second mode de fonctionnement (ST2).

2. Le procédé selon la revendication 1, dans lequel une commande à rétroaction est activée pendant ledit second mode de fonctionnement afin de maintenir la vitesse de rotation du moteur primaire à la vitesse limite.

3. Le procédé selon la revendication 1 ou la revendication 2, dans lequel, dans ledit second mode de fonctionnement (ST2), le procédé comprend ladite surveillance desdites conditions :

- (Chk 1) l'inclinaison du levier d'accélération dépasse une position limite (AL) correspondant à ladite vitesse limite du moteur primaire,

- (Chk 2) la vitesse de rotation du moteur primaire est égale ou supérieure à ladite vitesse limite (SL),

et lorsqu'au moins l'une d'entre elles n'est pas vérifiée, alors

- (Tr2) la commutation du système dudit second mode de fonctionnement (ST2) audit premier mode de fonctionnement (ST1).

4. Le procédé selon la revendication 3, comprenant en outre, pendant ledit second mode de fonctionnement, la surveillance d'une condition supplémentaire

- (Chk3) une pression sur ladite conduite de refoulement (F) est supérieure à un premier seuil de pression (Th1),

et lorsqu'au moins ladite condition supplémentaire n'est pas vérifiée, alors

- (Tr2) la commutation du système dudit second mode de fonctionnement (ST2) audit premier mode de fonctionnement (ST1).

5. Le procédé selon la revendication 4, comprenant en outre, immédiatement après ladite commutation dudit premier mode de fonctionnement audit second mode de fonctionnement,

- (M) un second processus de surveillance de la pression sur ladite conduite avant (F) et, lorsque la pression dépasse un second seuil de pression (Th2) inférieur ou égal audit premier seuil de pression (Th1),
- (TRS) l'arrêt d'une augmentation supplémentaire de la cylindrée de la pompe hydraulique.

6. Procédé selon l'une quelconque des revendications 1 à 5 précédentes, dans lequel, dans ledit second mode de fonctionnement, le procédé comprend en outre la détection d'au moins l'une des conditions supplémentaires suivantes

- une action rapide sur le levier d'accélération
- un changement soudain de la charge appliquée au moteur primaire,

et lorsqu'au moins l'une desdites conditions supplémentaires est vérifiée, le procédé prévoit la commutation (TR2) du second mode de fonctionnement au premier mode de fonctionnement.

7. Un programme informatique comprenant des moyens de codage de programme agencés pour exécuter toutes les étapes (Chk1 - Chk3, TR1, TR2, M, TRS) selon l'une quelconque des revendications 1 à 6, lorsque ledit programme est exécuté sur un ordinateur.

8. Des moyens lisibles par ordinateur comprenant un programme enregistré, ledit programme enregistré comprenant des moyens de codage de programme agencés pour exécuter toutes les étapes (Chk1 - Chk3, TR1, TR2, M, TRS) selon l'une quelconque des revendications 1 à 6, lorsque ledit programme est exécuté sur un ordinateur.

9. Un véhicule de travail ou un véhicule agricole comprenant un système de propulsion comprenant un moteur primaire (E) et une transmission hydraulique (HY) comprenant une pompe à cylindrée variable (HP) configurée pour être entraînée en rotation par le moteur primaire et un moteur hydraulique à cylindrée variable (HM) raccordé fonctionnellement à la pompe par une conduite hydraulique avant (F) et une conduite hydraulique de retour, le système de propulsion étant adapté pour fonctionner selon

- un premier mode de fonctionnement (ST1), dans lequel l'inclinaison d'un levier d'accélération indique une vitesse de rotation proportionnelle du moteur primaire et une cylindrée proportionnelle correspondante de la pompe hydraulique et
- un second mode de fonctionnement (ST2), dans lequel ladite inclinaison du levier indique une vitesse du véhicule, tandis que le moteur primaire fonctionne à une vitesse limite prédéterminée approximativement fixe (FSE) et que la cylindrée de la pompe hydraulique est ajustée (TA) de manière à atteindre ladite vitesse indiquée du véhicule, le système est **caractérisé en ce qu'**il comprend des moyens de traitement (ECM) configurés, dans ledit premier mode de fonctionnement, pour surveiller les conditions suivantes :
- l'inclinaison du levier d'accélération dépasse une position limite (AL) correspondant à ladite vitesse limite du moteur primaire,
- la vitesse de rotation du moteur primaire est égale ou supérieure à ladite vitesse limite (SL),

et lorsque lesdites conditions sont vérifiées simultanément, les moyens de traitement étant configurés pour commuter le mode de fonctionnement du système de propulsion dudit premier mode de fonctionnement (ST1) audit second mode de fonctionnement (ST2).

EP 4 375 104 B1

Fig. 1

Fig. 2

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21183330 A
- EP 2119943 A
- EP 3072765 A2
- JP H10306874 A